# EUROPÄISCHE PATENTSCHRIFT

(11) **EP 1 188 258 B1**
(45) Veröffentlichungstag und Bekanntmachung des Hinweises auf die Patenterteilung: **27.08.2003**
(21) Anmeldenummer: 00935076.0
(22) Anmeldetag: 20.05.2000
(51) Int. Cl.: H04B 7/08, H04B 7/12, H04N 5/44

(54) **VERFAHREN UND SCHALTUNGSANORDNUNG ZUM MOBILEN EMPFANG VON RUNDFUNKSIGNALEN**
MOBILE RECEPTION METHOD FOR RECEIVING RADIO BROADCAST SIGNALS AND A CIRCUIT FOR CARRYING OUT SAID METHOD
PROCEDE DE RECEPTION MOBILE DE SIGNAUX RADIO ET CIRCUIT DESTINE A METTRE EN OEUVRE LEDIT PROCEDE

(30) Priorität: 25.06.1999 DE 19929284
(43) Veröffentlichungstag der Anmeldung: 20.03.2002
(73) Patentinhaber: Hirschmann Electronics GmbH & Co. KG, 72654 Neckartenzlingen (DE)
(72) Erfinder: SAUTTER, Wolfgang, 72770 Reutlingen (DE); RATZEL, Achim, 72658 Bempflingen (DE); SCHENKYR, Dieter, 73252 Lenningen (DE)
(74) Vertreter: Stadler, Heinz, Dipl.-Ing.
(86) Internationale Anmeldenummer: EP0004553
(87) Internationale Veröffentlichungsnummer: WO01001598

(56) Entgegenhaltungen:
- EP-A- 0 767 554
- DE-A- 3 833 709
- DE-A- 3 926 336
- DE-A- 4 324 304
- DE-A- 19 636 125
- DE-A- 19 739 898
- US-A- 5 159 707
- US-A- 5 528 581

## Beschreibung

Die Erfindung betrifft ein Verfahren gemäß dem Oberbegriff des Anspruchs 1 sowie eine Schaltungsanordnung zur Durchführung dieses Verfahrens.

Die Bildung eines dem Empfänger zugeführten Ausgangssignals durch Summierung von nach Qualitätskriterien gewichteter Eingangssignale ist bereits aus den Druckschriften US 5,528,581, DE 38 33 709 A1, DE 197 08 996 A1 und US 5,465,271 bekannt.

Im Vergleich zu anderen Verfahren zum Mehrwege-Empfang, wie sie aus der DE 39 26 336 A1, DE 196 36 125 A1 und DE 197 39 898 A1 bekannt sind, bei denen zu jedem Zeitpunkt nur die Nutzung eines (des besten) Einzelsignals ermöglicht und damit das dem Empfänger zugeführte Ausgangssignal höchstens so gut ist wie das beste Eingangssignal, ist durch die Addition gewichteter Eingangssignale eine Verbesserung gegenüber dem besten Eingangssignal erzielbar.

Dieser Vorteil ist allerdings nur dann zu erreichen, wenn die durch unterschiedliche Ausbreitungswege in aller Regel hervorgerufenen Laufzeitdifferenzen der empfangenen Fernsehsignale vor deren Addition ermittelt und ausgeglichen werden. Ohne eine solche Kompensation, wie dies bei dem in der US-Patentschrift 5,528,581 beschriebenen Diversity-Übertragungssystem der Fall ist, wird die gewonnene Nutzinformation nicht verbessert sondern verschlechtert.

In aller Regel tritt auf unterschiedlichen Ausbreitungswegen eines Signals eine Wegdifferenz und damit eine Laufzeitdifferenz der empfangenen Signale auf. Durch eine Summierung dieser Empfangssignale wird die gewonnene Nutzinformation nicht verbessert, sonder verschlechtert. Es ist daher erforderlich, vor der Addition die Laufzeitdifferenzen zu ermitteln und auszugleichen.

Bei der Druckschrift US 5 528 581 A wird kein Laufzeitausgleich durchgeführt.

Bei dem aus der Druckschrift DE 3 833 709 A bekanten Diversitiy-Verfahren wird zum Ausgleich der Laufzeitdifferenzen zunächst die jeweilige Phase der HF-Trägerschwingungen der verschiedenen Empfangssignale ermittelt und dann eine Phasenkorrektur vorgenommen.
Anstelle der Phasen der HF-Signale können auch diejenigen der zugehörigen ZF-Signale ermittelt und damit Verzögerungskorrekturschaltungen gesteuert werden, wie dies bei dem Diversity-Verfahren gemäß der Druckschrift DE 19 708 996 A der Fall ist. Die Phasensynchronisation hat jedoch den für einen praktischen Einsatz schwerwiegenden Nachteil, dass die ermittelten Phasendifferenzen der HF-(ZF-)Signale immer im Bereich zwischen 0 und 2π liegen. Eine Phasenverschiebung von 2π entspricht einer Zeitverschiebung um die Periodendauer T der entsprechenden Trägerschwingung. Treten zwischen den Empfangssignalen größere zeitliche Verschiebungen als die Periodendauer T auf, so werden diese nicht mehr korrekt ausgeglichen und eine Addition führt zu keiner Qualitätsverbesserung. Dieses auch mit "PCD" (Phase Controlled Diversity) bezeichnete Verfahren würde z.B. bei einer Empfangsfrequenz von 855 MHz nur einen Ausgleich von Umwegen bis zu 0,35 m erlauben. Bei Benutzung des PCD beim heutigen Fernsehen würden also bereits bei sehr kleinen Wegdifferenzen nicht zusammengehörige Bildinhalte addiert werden und damit eine falsche Bildwiedergabe verursachen.

Eine Synchronisation der einzelnen Empfangssignale ist nur dann korrekt möglich, wenn die übertragene Nutzinformation selbst zur Steuerung der Synchronisation verwendet wird. In der Druckschrift US 5 465 271 A wird ein digitales Kommunikationssystem beschrieben, bei welchem digitale Nachrichtenbits übertragen werden. Dabei ist die digitale Nachricht in "frames" und "slots" organisiert, welche eine "preamble" enthalten. Dies ist eine spezielle Bitfolge, die dem Empfänger bekannt ist. Dadurch kann der Empfänger die empfangenen Daten mit der ihm vorbekannten Datenfolge vergleichen und entsprechend die einzelnen Empfangssignale zueinander verschieben.

Diese bekannte Synchronisierungsart ist bei der Übertragung analoger Fernsehsignale nicht anwendbar, da diese keine "frames", "slots" und "preambles" aufweisen. Außerdem sind bei diesem bekannten Kommunikationssystem die "preambles" der Eingangssignale nur dann in ausreichendem Maße dekodier- und im Empfänger auswertbar, wenn die Eingangssignale ungestört und rauscharm sind. Bei schwachen Empfangssignalen, wie sie in der Praxis häufig vorkommen, ist dies jedoch nicht der Fall, so dass diese Art der Synchronisation nicht für ein Verfahren der eingangs genannten Art geeignet ist.

Aufgabe der Erfindung ist es daher, ein Verfahren zum mobilen Empfang von Fernsehsignalen bereitzustellen, bei dem der Empfang auch bei Mehrwege-Ausbreitung, unabhängig von der Länge der Umwege und damit der Größe der Laufzeitdifferenzen sowie in Gebieten mit geringem Empfangspegeln ermöglicht bzw. weiter verbessert ist.

Diese Aufgabe ist durch die kennzeichnenden Merkmale des Anspruches 1 gelöst.

Bei diesem Verfahren mit "Zeitsynchronisation" wird die Laufzeitdifferenz der Empfangssignale anhand der enthaltenen Nutzinformation ermittelt, und nicht anhand der Phasenlage des Trägersignals. Durch die Nutzung deterministischer Signalanteile, nämlich der horizontalen und/oder vertikalen Bildsynchronisierimpulse des Fernsehsignals ist dies auf besonders einfache Weise durchführbar. Die Nutzsignale werden dann soweit gegeneinander verzögert, dass diese vorbekannten Signalanteile aufeinander fallen. Die Grenze des Laufzeitausgleiches liegt nun nicht mehr bei der Periodendauer T des Trägersignals sondern hängt nur noch von der Art der enthaltenen deterministischen Signalanteile (z.B. deren Abstand) und dem zur Verfügung stehenden Speicher ab.

Damit ist der Vorteil erreicht, dass zu jedem Zeitpunkt und praktisch unabhängig von der Größe der Signalumwege und damit des durchfahrenen Geländes an allen n Eingangssignalen die gleiche Nutzinformation für die Gewichtung und Summierung zur Verfügung steht.
Die Nutzung des in einem übertragenen Femsehsignal enthaltenen vertikalen und horizontalen Bildsynchronisierimpulses zur Steuerung des Laufzeitausgleiches hat den weiteren, für die praktische Anwendbarkeit wichtigen Vorteil, dass auf Grund der sicheren Dekodierbarkeit der Bildsynchronisierimpulse auch bei sehr schwachen Empfangssignalen der erforderliche Laufzeitausgleich selbst bei schlechten Empfangsverhältnissen durchführbar ist. Damit ist auch unter solch schwierigen Bedingungen, wie sie in der Praxis häufig vorkommen, eine konstruktive gewichtete Addition ermöglicht, die entscheidend zur Verbesserung der Empfangsqualität des Fernsehbildes führt.

Die Erfindung betrifft den mobilen Empfang von Fernsehsignalen. Dabei werden neben dem Bildinhalt auch Daten wie z.B. Teletext übertragen. Es wäre denkbar, diese Daten zu dekodieren und ähnlich wie in der Druckschrift US 5 465 271 A die "frame/slot-preamble" zur Steuerung der Synchronisation zu verwenden. Dies hätte aber den entscheidenden Nachteil, dass eine Dekodierung der mit übertragenen digitalen Informationen (wie Teletext) erst bei sehr guten Empfangsverhältnissen möglich ist. Für diesen Fall ist aber auch eine gewichtete Addition nicht mehr notwendig, da dann die Empfangsqualität ohnehin gut ist.

In den Unteransprüchen sind vorteilhafte Ausgestaltungen des Verfahrens gemäß dem Anspruch 1 angegeben.

Bei einem Verfahren gemäß Anspruch 2 ist für die Bewertung der n Eingangssignale ein Zeitraum und damit eine bestimmte Datenmenge vorgebbar. Damit ist ein den Gegebenheiten des Einzelfalls anpassbarer günstiger Kompromiss zwischen der erzielbaren Schnelligkeit des Verfahrens und einer ausreichenden Bewertungssicherheit möglich.

Eine Verzögerung der Eingangssignale nach Anspruch 3 stellt sicher, dass beim erfindungsgemäßen Verfahren auch dann eine korrekte Gewichtung der Signale vorgenommen wird, wenn sich das Ergebnis der Bewertung nach dem Bewertungszeitraum ändert.
Eine einfache Realisierung dieser Verzögerung ist z.B. durch sogenannte FIFO-(First-In-First-Out)-Speicher erreichbar (Anspruch 4).

Die Signalverarbeitung, also Synchronisation, Signalbewertung und -gewichtung, Speicherung, Multiplikation und Summation, ist besonders einfach und effektiv realisierbar, wenn die Eingangssignale gemäß Anspruch 5 Digitalsignale sind.

In Anspruch 6 ist die Anwendung des erfindungsgemäßen Verfahrens bei dem häufigsten praktischen Fall des Mehrwege-Empfangs in Fahrzeugen angegeben, bei dem die Ausgangssignale der Tuner die Eingangssignale für die nachfolgende Signalverarbeitungseinheit bilden.

In den Ansprüchen 7 und 8 sind zwei Alternativen für die Bereitstellung digitaler Eingangssignale bei einer Mehrantennen-Empfangsanlage angegeben.

Durch eine Bewertung unterschiedlicher Signalanteile jedes Eingangssignals, z.B. gemäß Anspruch 9 des Luminanz- und des Chrominanzanteils, kann das jeweils beste Helligkeits- und Farbsignal der verschiedenen Eingangssignale zur gewichteten Summierung verwendet werden.
Die Trennung von Luminanz- und Chrominanzsignal ermöglicht es, dass beide Signale unabhängig voneinander bewertet, also jeweils optimale Kriterien zur Bewertung und Gewichtung dieser Signalanteile benutzt und damit die Qualität des Ausgangssignals, in dem das optimale Luminanz- und Chrominanzsignal wieder normgerecht zusammengefügt sind, weiter verbessert werden können.

Beispiele für Kriterien zur Bewertung von Farbfernsehsignalen sind in den Ansprüchen 10 bis 12 angeführt.

Deterministische Signalanteile, z.B. die horizontale und vertikale Synchroninformation sowie der Farbhilfsträger im heutigen Farbfernsehbild, sind vorbestimmte, stets vorhandene und vorgeschriebene Signalbestandteile.
Fehlen die deterministischen Signalanteile oder sind sie so gering, dass sie nicht erkannt werden, so wird bei Verfahren gemäß den vorgenannten Ansprüchen in vorteilhafter Weise das zugehörige Eingangssignal nicht bewertet und auch nicht zur Gewichtung weitergeleitet.

In Anspruch 13 ist eine vorteilhafte Möglichkeit der Ermittlung der Gewichtungsfaktoren angegeben. Dabei werden gleichzeitig alle zu bewertenden Eingangssignale mit dem am besten beurteilten Eingangssignal verglichen.

Eine besonders einfache und kostengünstige Bewertung der Eingangssignale ist nach Anspruch 14 dadurch erreicht, dass solche Eingangssignale, die im Vergleich zu dem am besten beurteilten Eingangssignal einen vorgegebenen Schwellwert unterschreiten und keinen positiven Beitrag für das Ausgangssignal liefern, mit dem Faktor Null gewichtet werden.

Eine weitere vorteilhafte Anwendungsmöglichkeit des erfindungsgemäßen Verfahrens besteht gemäß Anspruch 15 darin, zusätzlich zu einem ersten Block von n Eingangssignalen (z.B. Bildsignalen) wenigstens einen weiteren Block von m Eingangssignalen (z.B. Tonsignalen) in der beschriebenen Weise auszuwerten, um deren Qualität ebenfalls gegenüber dem besten Einzelsignal zu verbessern.

Für den Fall kurzzeitiger Störungen des Empfangs, während der die Qualität aller Eingangssignale unbrauchbar ist, wird nach Anspruch 16 vorgeschlagen, die Ausgangssignale nach der gewichteten Summation zwischenzuspeichem und während der Speicherzeit die vorher empfangenen ungestörten Signale zu übertragen. Auf diese einfache Weise ist ohne großen Aufwand vermieden, dass während solcher Störungen gar kein Signal zum Wiedergabeteil des Empfängers, z.B. einem Monitor, gelangt.

Bei einer weiteren vorteilhaften Ausgestaltung des erfindungsgemäßen Verfahrens nach Anspruch 17 werden Eingangssignale, die keinen Beitrag zur Verbesserung des Ausgangssignals liefern, nicht einfach sehr gering oder mit Null gewichtet, sondern auf einen anderen Frequenzbereich mit gleicher Nutzinformation, also beispielsweise einen anderen Femsehkanal mit gleichem Programm aber besserer Qualität abgestimmt (Frequenzdiversitiy).

In Anspruch 18 ist eine Schaltungsanordnung beschrieben, mit der eine einfache Durchführung der in den vorangegangenen Ansprüchen beschriebenen Verfahren möglich ist.

Die Erfindung wird nachstehend noch anhand eines als Blockschaltbild dargestellten Ausführungsbeispiels einer Empfangseinrichtung zur Durchführung der erfindungsgemäßen Verfahren erläutert.

Die Empfangseinrichtung 1 zum Fernsehempfang in Fahrzeugen, z.B. in einem PKW, besteht aus einer Empfangseinheit 2, einer Synchronisationseinheit 3 und einer Signalaufbereitungseinheit 4.

In der Empfangseinheit 2 sind fünf verschiedene, an unterschiedlichen Stellen des Fahrzeugs angeordnete Antennen 5 zum Empfang des gleichen Fernsehprogramms vorgesehen, welches aufgrund der Geländestruktur durch Reflexionen auf mehreren Ausbreitungswegen zu den Antennen 5 gelangen kann.
Jeder Antenne 5 ist ein auf das gleiche Nutzsignal (TV-Programm) abgestimmter Tuner 6 sowie ein Video-Decoder 7 nachgeschaltet. Die Tuner 6 können entweder auf den gleichen Femsehkanal abgestimmt sein oder auf unterschiedliche Kanäle, welche das gleiche Fernsehprogramm übertragen.

Die Synchronisationseinheit 3 besteht aus je einem FIFO-Speicher 8 für jedes von den Video-Decodern 7 gelieferte Bildsignal sowie einem Takt-Generator 9 und einem Synchronisations-Steuergerät 10.

In der Signalaufbereitungseinheit 4 sind die Ausgangssignale der Synchronisationseinheit 3, also die Eingangssignale S₁...S₅, einerseits über einen weiteren FIFO-Speicher 11 und zum anderen über eine Bewertungsschaltung 12 mit einer nachgeschalteten Einrichtung 13 zur Ermittlung von Gewichtsfaktoren einer Multiplizierund Summiereinrichtung 14 zugeführt, die ausgangsseitig (gegebenenfalls über einen D/A-Wandler) mit einem nicht dargestellten Bildschirm verbunden ist.
Das von den Antennen 5 empfangene Hochfrequenzsignal wird an die nachgeschalteten Tuner 6 weitergeleitet. Diese demodulieren das jeweilige Fernsehsignal und stellen an ihren Ausgängen jeweils das analoge FBAS-Signal zur Verfügung.

Die nachfolgenden Video-Decoder 7 digitalisieren diese FBAS-Signale und nehmen eine Trennung von Luminanz- und Chrominanzsignal vor.
Neben den digitalen Bilddaten liefern die Video-Decoder 7 die zugehören Takt- und Synchronisationssigale sowie Statussignale, die beispielsweise das Vorhandensein des Farbbildträgers anzeigen.
Die Empfangseinheit 2 stellt somit auf fünf Pfaden digitale Bilddaten mit den zugehörigen Takt- und Synchronisationsdaten zur Verfügung, wobei diese Daten der einzelnen Pfade im allgemeinen aufgrund unterschiedlicher Empfangswege zeitlich zueinander versetzt sind.
Diese Zeitverschiebungen werden in der nachfolgenden Synchronisationseinheit 3 eliminiert. Dazu werden aus den n Eingangstaktsignalen im Taktgenerator 9 ein gemeinsamer Systemtakt und im Synchronisations-Steuergerät 10 mit Hilfe der n Eingangssynchronisationssignale Steuersignale erzeugt, welche die FIFO-Speicher derart steuern, daß an ihrem Ausgang die digitalen Bilddaten zeitlich synchronisiert vorliegen, also ein gemeinsames Takt- und Synchronisationssignal aufweisen.

Diese synchronisierten Eingangssignale S₁...S₅ werden nun in der Signalaufbereitungseinheit 4 dem erfindungsgemäßen Verfahren unterzogen. Dazu erfolgt zunächst in der Bewertungsschaltung 12 parallel für alle fünf Pfade eine Beurteilung der Signalqualität in Bezug auf vorgegebene Kriterien. Aus den Ergebnissen dieser Signalbewertungen werden dann in der Einrichtung 13 die zugehörigen Gewichtungsfaktoren ermittelt.

Anschließend werden die fünf synchronisierten Eingangssignale S₁...S₅ in der Multiplizier- und Summiereinrichtung 14 mit den zugehörigen Gewichtungsfaktoren multipliziert und diese adaptiv gewichteten Signale zu einem Ausgangssignal S_{A} addiert, welches - gegebenenfalls über einen D/A-Wandler - dem Bildschirm zugeführt wird. Damit für die adaptiv gewichtete Summierung die richtigen Bilddaten verwendet werden, nämlich diejenigen die bereits für die Bewertung und Gewichtsfaktorermittlung herangezogen wurden, werden die Eingangssignale S₁...S₅ in einem FIFO-Speicher 11 verzögert, dessen Speichertiefe der Zeitdauer entspricht, die für die Bewertung und Gewichtsfaktorermittlung erforderlich ist. Hierfür ist im vorliegenden Beispiel jeweils eine Bildzeile vorgesehen.

Durch die Summierung aller adaptiv gewichteten Bildsignale ist gewährleistet, daß das dem Empfänger zur Verfügung gestellte Ausgangs-Femsehsignal S_{A} im ungünstigsten Fall, das heißt wenn vier Eingangssignale die Gewichtung Null erhalten, dem besten der fünf Eingangssignale entspricht und in allen anderen Fällen eine bessere Qualität aufweist.

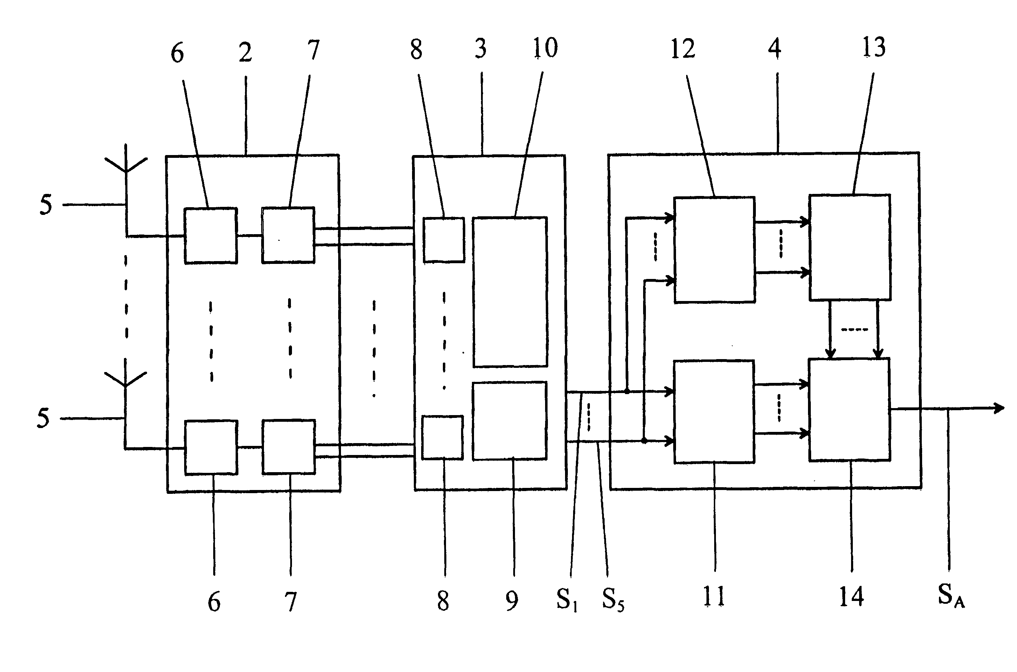

## Patentansprüche

1. Verfahren zum mobilen Empfang von Femsehsignalen, bei dem aus n unterschiedlichen Eingangssignalen (S₁...S₅) ein Ausgangssignal (S_{A}) abgeleitet und dem Wiedergabeteil eines Empfängers zugeführt wird, wobei die n Eingangssignale (S₁...S₅) gewichtet werden, das Ausgangssignal (S_{A}) durch Summation der gewichteten Eingangssignale gebildet wird und zur Bestimmung der adaptiv ermittelten Gewichtungsfaktoren die Qualität jedes der n Eingangssignale (S₁...S₅) anhand wenigstens eines vorgegebenen Kriteriums bewertet wird,
**dadurch gekennzeichnet, dass** die n Eingangssignale (S₁...S₅) vor ihrer Bewertung, Gewichtung und Summation zeitsynchronisiert werden und die in den Eingangssignalen (S₁...S₅) enthaltenen horizontalen und/oder vertikalen Bildsynchronisierimpulse zur Steuerung der Zeitsynchronisation genutzt werden.

2. Verfahren nach Anspruch 1, **dadurch gekennzeichnet, dass** zur Bewertung der Eingangssignale (S₁...S₅) ein vorgebbarer Zeitraum vorgesehen ist.

3. Verfahren nach Anspruch 1 oder 2, **dadurch gekennzeichnet, dass** die Eingangssignale (S₁...S₅) vor der adaptiven Summation so lange verzögert werden, bis die zugehörigen Gewichtungsfaktoren ermittelt sind.

4. Verfahren nach Anspruch 3, **dadurch gekennzeichnet, dass** zur Verzögerung ein FIFO-Speicher (11) verwendet wird.

5. Verfahren nach einem der Ansprüche 1 bis 4, **dadurch gekennzeichnet, dass** die Eingangssignale (S₁...S₅) Digitalsignale sind.

6. Verfahren nach Anspruch 5, **dadurch gekennzeichnet, dass** jedes der Eingangssignale (S₁...S₅) mit einer eigenen Antenne (5) und einem eigenen Tuner (6) empfangen wird.

7. Verfahren nach Anspruch 6, **dadurch gekennzeichnet, dass** bereits die mit den Antennen (5) empfangenen Hochfrequenz-Signale digital moduliert sind.

8. Verfahren nach Anspruch 7, **dadurch gekennzeichnet, dass** die Fernsehsignale analog sind und durch den Tunern (6) nachgeschaltete Video-Decoder (7) digitale Eingangssignale (S₁...S₅) mit Luminanz- und Chrominanz-Anteil erzeugt werden.

9. Verfahren nach Anspruch 7 oder 8, **dadurch gekennzeichnet, dass** der Luminanzund Chrominanz-Anteil jedes Eingangssignals (S₁...S₅) unabhängig voneinander bewertet, gewichtet, summiert und anschließend normgemäß wieder zusammengefügt werden.

10. Verfahren nach Anspruch 9, **dadurch gekennzeichnet, dass** als Kriterium für die Bewertung der Qualität der Eingangssignale (S₁...S₅) wahlweise die Größe des Rauschpegels, des Signal-Rauschabstandes des Signalpegels oder das Auftreten von Störungen verwendet wird.

11. Verfahren nach Anspruch 9, **dadurch gekennzeichnet, dass** als Kriterium für die Bewertung der Qualität der Eingangssignale (S₁...S₅) das Vorhandensein deterministischer Signalanteile herangezogen wird.

12. Verfahren nach Anspruch 9, **dadurch gekennzeichnet, dass** als Kriterium für die Bewertung der Qualität der Eingangssignale (S₁...S₅) eine Kombination von Kriterien gemäß den Ansprüchen 10 und 11 verwendet wird.

13. Verfahren nach einem der vorangehenden Ansprüchen, **dadurch gekennzeichnet, dass** die Eingangssignale (S₁...S₅) entsprechend ihrer Bewertung im Vergleich zu dem am besten bewerteten Eingangssignal gewichtet werden.

14. Verfahren nach Anspruch 13, **dadurch gekennzeichnet, dass** Eingangssignale (S₁...S₅), deren Bewertung im Vergleich zu dem am besten gewerteten Eingangssignal einen vorgebbaren Schwellwert unterschreitet, mit dem Faktor Null gewichtet werden.

15. Verfahren nach einem der Ansprüche 1 bis 13, **dadurch gekennzeichnet, dass** parallel zu den n Eingangssignalen (S₁...S₅) eines bestimmten Inhalts (Bildsignale) wenigstens m weitere Eingangssignale eines anderen Inhalts (Tonsignale) bewertet, gewichtet und summiert werden.

16. Verfahren nach einem der Ansprüche 1 bis 15, **dadurch gekennzeichnet, dass** nach der gewichteten Summation die Ausgangssignale (S_{A}) zwischengespeichert und während kurzzeitiger Störungen die vorher empfangenen ungestörten Signale übertragen werden.

17. Verfahren nach einem der Ansprüche 1 bis 16, **dadurch gekennzeichnet, dass** Empfangspfade, deren Eingangssignal (S₁...S₅) keinen Beitrag zur Verbesserung des Ausgangssignals liefern, auf andere Frequenzbereiche mit gleicher Nutzinformation aber besserer Qualität eingestellt werden.

18. Schaltung zur Durchführung eines der Verfahren gemäß Anspruch 1 bis 17, **gekennzeichnet durch** eine Synchronisationseinheit (3) zur Zeitsynchronisation der n bzw. m digitalen Eingangssignale (S₁...S₅), bestehend aus je einem FIFO-Speicher (8) für jedes Signal, einem Taktgenerator (9) und einem Synchronisations-Steuergerät (10), sowie **durch** eine Signalaufbereitungseinheit (4) in der jedes der synchronisierten Eingangssignale (S₁...S₅) zum einen über eine Signalbewertungsschaltung (12) sowie eine nachfolgende Einrichtung (13) zur Bildung der Gewichtsfaktoren und zum anderen über einen weiteren FIFO-Speicher (11), dessen Speichertiefe der Zeitdauer der Signalbewertung und Gewichtsfaktorenbildung entspricht, einer Multiplizier- und Summiereinrichtung (14) zugeführt ist, die ausgangsseitig mit dem Wiedergabeteil eines Empfängers verbunden ist.

## Claims

1. Method for the mobile reception of television signals, wherein an output signal (S_{A}) is derived from n different input signals (S₁ ... S₅) and is directed to the playback part of a receiver, wherein the n input signals (S₁ ... S₅) are weighted, the output signal (S_{A}) is formed by summation of the weighted input signals and the quality of each of the n input signals (S₁ ... S₅) is evaluated by means of at least one given criterion for regulating the adaptively calculated weighting factors,
**characterised in that** the n input signals (S₁ ... S₅) are time synchronised before their evaluation, weighting and summation and the horizontal and/or vertical picture synchronised pulses which are contained in the input signals (S₁ ... S₅) are used for regulating the time synchronisation.

2. Method as claimed in Claim 1, **characterised in that** a determinable time period is provided to evaluate the input signals (S₁ ... S₅).

3. Method as claimed in Claim 1 or 2, **characterised in that** the input signals (S₁ ... S₅) are delayed, before the adaptive summation, until the associated weighting factors have been calculated.

4. Method as claimed in Claim 3, **characterised in that** a FIFO memory (11) is used for the delaying process.

5. Method as claimed in any one of Claims 1 to 4, **characterised in that** the input signals (S₁ ... S₅) are digital signals.

6. Method as claimed in Claim 5, **characterised in that** each of the input signals (S₁ ... S₅) is received by a separate antenna (5) and a separate tuner (6).

7. Method as claimed in Claim 6, **characterised in that** the high-frequency signals received by the antenna (5) are already digitally modulated.

8. Method as claimed in Claim 7, **characterised in that** the television signals are analogue and digital input signals (S₁ ... S₅) are generated with luminance and chrominance portions by a video-decoder (7) connected to the tuner (6).

9. Method as claimed in Claim 7 or 8, **characterised in that** the luminance and chrominance portions of each of the input signals (S₁ ... S₅) are independently from one another evaluated, weighted and summated and subsequently combined in accordance with the norm.

10. Method as claimed in Claim 9, **characterised in that** the noise level, the signal-to-noise ratio of the signal level or the occurrence of interference are optionally used as the criterion for evaluating the quality of the input signals (S₁ ... S₅).

11. Method as claimed in Claim 9, **characterised in that** the existence of deterministic signal portions is used as the criterion for evaluating the quality of the input signals (S₁ ... S₅).

12. Method as claimed in Claim 9, **characterised in that** a combination of criteria in accordance with Claims 10 and 11 is used as the criterion for evaluating the quality of the input signals (S₁ ... S₅).

13. Method as claimed in any one of the preceding Claims, **characterised in that** the input signals (S₁ ... S₅) are weighted corresponding to their evaluation compared with the best-evaluated input signal.

14. Method as claimed in Claim 13, **characterised in that** input signals (S₁ ... S₅) whose evaluation compared with the best-evaluated input signal falls below a determinable threshold value are weighted with a factor of zero.

15. Method as claimed in any one of Claims 1 to 13, **characterised in that** parallel to the n input signals (S₁ ... S₅) of a particular content (image signals) at least m further input signals of another content (sound signals) are evaluated, weighted and summated.

16. Method as claimed in any one of Claims 1 to 15, **characterised in that** the output signals (S_{A}) are temporarily stored after the weighted summation and the previously-received interference-free signals are transmitted during brief interference.

17. Method as claimed in any one of Claims 1 to 16, **characterised in that** reception paths whose input signals (S₁ ... S₅) do not contribute to improving the output signals are set to another frequency range with the same useful information but better quality.

18. Circuit for carrying out any one of the methods in accordance with Claims 1 to 17,
**characterised by** a synchronisation unit (3) for time synchronising the n and/or m digital input signals (S₁ ... S₅), consisting of a FIFO memory (8) for every signal, a timing generator (9) and a synchronisation control device (10) as well as by a signal conditioning unit (4) in which each of the synchronised input signals (S₁ ... S₅) is directed to a multiplier and summation device (14) on the one hand via a signal evaluating circuit (12) as well as a subsequent device (13) for creating the weighting factors and on the other hand via a further FIFO memory (11), whose memory depth corresponds to the time period of the signal evaluation and the creation of the weighting factors, the said multiplier and summation device (14) being connected to the playback part of a receiver on the output side.

## Revendications

1. Procédé pour la réception mobile de signaux de télévision dans lequel un signal de sortie (S_{A}) est dérivé de différents signaux d'entrée (S₁... S₅) et est envoyé à la partie lecture d'un récepteur, les n signaux d'entrée (S₁... S₅) étant pondérés, le signal de sortie (S_{A}) étant formé par addition des signaux d'entrée pondérés et, pour déterminer les facteurs de pondération obtenus par adaptation, on évalue la qualité de chacun des n signaux d'entrée (S₁... S₅) à l'aide d'au moins un critère prédéfini,
**caractérisé en ce que** les n signaux d'entrée (S₁... S₅) sont synchronisés dans le temps avant leur évaluation, pondération et addition, et les impulsions de synchronisation d'image horizontales et/ou verticales, contenues dans les signaux d'entrée (S₁... S₅) sont utilisées pour la commande de la synchronisation temporelle.

2. Procédé selon la revendication 1, **caractérisé en ce que** pour l'évaluation des signaux d'entrée (S₁... S₅) il est prévu un laps de temps qui peut être prédéfini.

3. Procédé selon la revendication 1 ou 2, **caractérisé en ce que** les signaux d'entrée (S₁... S₅) sont temporisés avant l'addition d'adaptation jusqu'à ce que les facteurs de pondération correspondants soient déterminés.

4. Procédé selon la revendication 3, **caractérisé en ce que** pour la temporisation, on utilise une mémoire FIFO (11).

5. Procédé selon l'une des revendications 1 à 4, **caractérisé en ce que** les signaux d'entrée (S₁... S₅) sont des signaux numériques.

6. Procédé selon la revendication 5, **caractérisé en ce que** chacun des signaux d'entrée (S₁... S₅) est reçu au moyen de sa propre antenne (5) et de son propre syntoniseur (6).

7. Procédé selon la revendication 6, **caractérisé en ce que** les signaux haute fréquence reçus au moyen des antennes (5) sont déjà modulés de manière numérique.

8. Procédé selon la revendication 7, **caractérisé en ce que** les signaux de télévision sont analogiques et des signaux d'entrée (S₁... S₅) numériques avec composantes de luminance et de chrominance sont produits au moyen de décodeurs vidéo (7) montés en aval des synthoniseurs (6).

9. Procédé selon la revendication 7 ou 8, **caractérisé en ce que** les composantes de luminance et de chrominance de chaque signal d'entrée (S₁... S₅) sont évaluées indépendamment l'une de l'autre, pondérées, additionnées, puis à nouveau réunies suivant la norme.

10. Procédé selon la revendication 9, **caractérisé en ce qu'**on utilise comme critère pour l'évaluation de la qualité des signaux d'entrée (S₁... S₅), au choix la grandeur du niveau de bruit, de l'écart signal-bruit du niveau de signal ou l'apparition de perturbations.

11. Procédé selon la revendication 9, **caractérisé en ce qu'**on utilise comme critère pour l'évaluation de la qualité des signaux d'entrée (S₁... S₅) la présence de composantes de signaux de détermination.

12. Procédé selon la revendication 9, **caractérisé en ce qu'**on utilise comme critère pour l'évaluation de la qualité des signaux d'entrée (S₁... S₅) une combinaison de critères selon les revendications 10 et 11.

13. Procédé selon l'une des revendications précédentes, **caractérisé en ce que** les signaux d'entrée (S₁... S₅) sont pondérés conformément à leur évaluation, par comparaison avec le signal d'entrée évalué comme étant le meilleur.

14. Procédé selon la revendication 13, **caractérisé en ce que** des signaux d'entrée (S₁... S₅), dont l'évaluation passe au-dessous d'une valeur seuil qui peut être prédéfinie, par comparaison au signal d'entrée évalué comme étant le meilleur, sont pondérés avec le facteur zéro.

15. Procédé selon l'une des revendications 1 à 13, earactërisè en ce que parallèlement aux n signaux d'entrée (S₁... S₅) d'un contenu déterminé (signaux d'image) au moins m autres signaux d'entrée d'un autre contenu (signaux sonores) sont évalués, pondérés et additionnés.

16. Procédé selon l'une des revendications 1 à 15, **caractérisé en ce qu'**après l'addition pondérée, les signaux de sortie (S_{A}) sont mémorisés de manière temporelle et, pendant des perturbations de courte durée, les signaux non perturbés reçus précédemment sont transmis.

17. Procédé selon l'une des revendications 1 à 16, **caractérisé en ce que** des voies de réception, dont le signal d'entrée (S₁... S₅) ne fournit aucune contribution à l'amélioration du signal de sortie, sont réglées sur d'autres plages de fréquences avec information utile identique mais de meilleure qualité.

18. Circuit pour la mise en oeuvre de l'un des procédés selon les revendications 1 à 17, **caractérisé par** une unité de synchronisation (3) pour la synchronisation temporelle des n ou m signaux d'entrée numériques (S₁... S₅), constituée d'une mémoire FIFO (8) pour chaque signal, d'un générateur de rythme (9) et d'un appareil de commande de synchronisation (10), ainsi que par une unité de traitement de signaux (4) dans laquelle chacun des signaux d'entrée (S₁... S₅) synchronisés est acheminé d'une part, à travers un circuit d'évaluation de signaux (12) ainsi qu'un dispositif (13) suivant pour la formation des facteurs de pondération et, d'autre part, à travers une autre mémoire FIFO (11) dont la profondeur de mémoire correspond à la durée de l'évaluation des signaux et à la formation des facteurs de pondération, vers un dispositif de multiplication et d'addition (14) qui est relié, côté sortie, à la partie lecture d'un récepteur.
